# EUROPÄISCHE PATENTSCHRIFT

(11) **EP 2 080 943 B1**
(45) Veröffentlichungstag und Bekanntmachung des Hinweises auf die Patenterteilung: **21.07.2010**
(21) Anmeldenummer: 08100624.9
(22) Anmeldetag: 18.01.2008
(51) Int. Cl.: F16K 31/00, F01M 5/00, F01P 3/08, G05D 23/02

(54) **Regelventil**
Regulating valve
Soupape de régulation

(43) Veröffentlichungstag der Anmeldung: 22.07.2009
(73) Patentinhaber: Ford Global Technologies, LLC, Dearborn, MI 48126 (US)
(72) Erfinder: Lenz, Ingo, 50858 Köln (DE); Mehring, Jan, 50668 Köln (DE)
(74) Vertreter: Drömer, Hans-Carsten

(56) Entgegenhaltungen:
- EP-A- 1 715 156
- GB-A- 881 132
- GB-A- 2 067 723
- JP-A- 6 185 642
- JP-A- 58 136 945
- US-A- 5 048 751
- US-A- 5 813 598
- US-A- 5 819 692

## Beschreibung

Die Erfindung betrifft ein Regelventil, gemäß dem Oberbegriff des Anspruchs 1, das in seinem Gehäuse eine Feder und ein Absperrelement aufweist.

Derartige Regelventile sind zum Beispiel an Spritzvorrichtungen, die beispielsweise als Kolbenspritzvorrichtungen bzw. Kolbenspritzdüsen ausgeführt sind, einsetzbar, wobei die Spritzvorrichtungen beispielhaft zur Kühlung von Kolben in Verbrennungsmotoren eingesetzt werden.

Die US 5,819,692 offenbart ein Regelventil, das eine Feder und ein Absperrelement aufweist. Gegenüberliegend zur Feder ist ein sich in seiner Ausdehnung temperaturabhängig kontinuierlich veränderndes Dehnstoffelement angeordnet. Mittels des Dehnstoffelementes wird eine rohrförmige Wand bei hohen Temperaturen hin- und herbewegt. Bei geringen Temperaturen dagegen versperrt die rohrförmige Wand eine Ölströmung in den dafür vorgesehenen Abzweig.

Die Zusammenfassung der JP 06 185 642 A offenbart ein Ventil, das zwischen zwei Ölpassagen installiert ist. Ein Ventilkörper kann sich in einem Gehäuse bewegen, um einen Ölaustritt zu öffnen oder zu schließen. Eine erste Feder drückt den Ventilkörper gegen eine Körperklammer, um den Ventilkörper in seiner geschlossenen Position zu halten. Ein Thermowachselement reagiert auf eine Öltemperatur in dem Gehäuse, und ändert sein Volumen entsprechend. Eine Ventilkörperführung wird mit einer zweiten Feder gegen das Thermowachselement gedrückt, wobei die Ventilkörperführung in direktem Kontakt mit dem Thermowachselement steht.

Die DE 35 37 147 z. B. offenbart eine Kolbenkühlung für Brennkraftmaschinen, bei der aus dem Schmierölkreislauf der Brennkraftmaschine Öl abgezweigt wird, und mittels einer Vorrichtung gegen die zu kühlende Stellen des Kolbens gespritzt wird. Die Vorrichtung besteht aus einem Regelventil, welches den Durchgang in Abhängigkeit von der Öltemperatur im Schmierölkreislauf steuert. Hierzu beschreibt die DE 147 dass, das Regelventil bei kaltem Motoröl geschlossen ist, und erst öffnet, wenn die Temperatur des Öls einen bestimmten Wert übersteigt, so dass die Kolbenkühlung beginnen kann. Hierzu weist das Regelventil zwei entgegengesetzt wirkende Federn auf, von denen eine aus einer Memory-Legierung besteht. Die Memory-Feder ist mit einem Zwei-Punktschalter vergleichbar, welcher nur zwei Schaltungszustände aufweist, und ohne Zeitverzug von einem in den anderen Zustand wechseln kann.

Auch die WO 2004/059141 offenbart ein solches Regelventil mit zwei Federn, von denen eine aus einer Memory-Legierung besteht.

Die US 2006/0243226 A1 (= DE 06 356 049 T1) offenbart auch eine Kolbenkühlvorrichtung, die in Ventil aufweist. Das Ventil weist ein kalibriertes Leck auf, welches einen stromaufwärtigen Kanal mit einem stromabwärtigen Kanal parallel zu Schließmitteln des Ventils verbindet.

Kolbenspritzdüsen kommen für gewöhnlich zum Einsatz, wenn im Lastbetrieb des Verbrennungsmotors thermisch Grenzbereiche für den Kolben auftreten. Dann wird mittels Kolbenspritzdüsen gezielt Öl von unten auf bzw. in den Kolben gespritzt, um gezielt Wärme abzuführen und um Bauteiltemperaturen zu senken. Als ein Hauptnachteil bekannter Regelventile bzw. bekannter Kolbenspritzdüsen ist anzusehen, dass diese erst bei vorliegen bestimmter Grenzwerte, also bei einem entsprechend hohen Öldruck öffnen. Insbesondere nach einem Kaltstart bzw. in einer Warmlaufphase des Verbrennungsmotors kann es so zu Reibungsverlusten kommen, welche negative Auswirkungen auf Verschleiß bzw. auf Schadstoffemissionen haben.

Der Erfindung liegt die Aufgabe zugrunde, ein Regelventil der Eingangs genannten Art mit einfachen Mitteln so zu verbessern, dass Reibungsverluste während der Warmlaufphase des Verbrennungsmotors reduziert werden.

Erfindungsgemäß wird die Aufgabe mit einem Regelventil mit den Merkmalen des Anspruchs 1 gelöst, wobei in dem Gehäuse ein, sich in seiner Ausdehnung temperaturabhängig, kontinuierlich veränderndes Dehnstoffelement gegenüberliegend zur Feder angeordnet ist.

Vorteilhaft im Sinne der Erfindung ist, wenn das Dehnstoffelement einen fixierten Teil und einen beweglichen Teil aufweist. Das bewegliche Teil ist zweckmäßiger Weise in dem fixierten Teil aufgenommen. In bevorzugter Ausgestaltung ist das Dehnstoffelement als Wachselement ausgeführt. Mit steigender Öltemperatur wirkt der Dehnstoff bzw. Wachs auf den beweglichen Teil, der auch als Kolben bezeichnet werden kann, und verschiebt diesen aus dem Dehnstoffelement vorzugsweise in axialer Richtung heraus oder zieht diesen herein. Dies geschieht günstiger Weise aber nicht sprunghaft, sondern vorteilhaft kontinuierlich abhängig von der auf das Dehnstoffelement einwirkenden Temperatur.

Vorzugsweise ist das Dehnstoffelement an einer Eingangsseite des Regelventils angeordnet, und mit seiner Wirkseite von der Eingangsseite wegorientiert. Das Regelventil ist mit seiner Eingangsseite in einer Mediumleitung, z. B. einer Ölleitung angeordnet, und bildet so einen Abzweig, um ein Medium z. B. Öl durch das Regelventil und durch Spritzdüsen gegen den Kolben des Verbrennungsmotors zu spritzen. Das Dehnstoffelement ist ständig von dem Medium z. B. dem Öl umflossen, so dass die Mediumtemperatur bzw. die Öltemperatur ständig auf das Dehnstoffelement einwirkt.

Das Dehnstoffelement weist an seiner Wirkseite ein Verbindungselement zu einer verschieblich gelagerten Absperrung auf. Die Wirkseite im Sinne der Erfindung ist die Seite, an welcher der bewegliche Teil angeordnet ist. Das Verbindungselement ist zu einem mit dem beweglichen Teil und zum anderen mit der Absperrung verbunden. Die Absperrung ist zum Gehäuse abgedichtet, so dass Leckagen vermieden sind.

In der Absperrung ist eine Durchgangsöffnung eingebracht, welche korrespondierend an ein Absperrelement angepaßt ist. Das Absperrelement ist in bevorzugter Ausgestaltung als Kugel ausgeführt, welche sich federkraftbedingt dichtend in die Öffnung bzw. an deren Sitz anlegt. Zur Erzeugung der Federkraft ist eine Feder, z. B. eine Schrauben- oder Spiralfeder vorgesehen, welche bezogen auf die Kugel auf der zur Eingangsseite gegenüberliegenden Auslaßseite des Regelventils angeordnet ist. Die Feder ist auslaßseitig in üblicher Weise an einem Anschlag gelagert, und wirkt mit einer Vorspannung auf die Kugel.

Vorteilhaft wird mit der Erfindung ein mechanisch schaltbares Regelventil zur Verfügung gestellt, welches auf Temperatur und Druck reagiert. Bei kaltem Öl ist der bewegliche Teil in Richtung zur Eingangsseite in das Dehnstoffelement hineingezogen. Durch die auf die Kugel wirkende Feder wird die Absperrung in Richtung zur Eingangsseite verschoben bzw. gezogen, was bedeutet, dass sich die Federvorspannung verringert. Durch die herabgesetzte Federvorspannung reicht ein geringer Druck aber aus, um die Kugel entgegen der Federkraft aus deren Sitz herauszudrücken, also das Regelventil zu öffnen. Dieser Effekt kann vorteilhaft dazu genutzt werden, dass Öl, insbesondere in der Warmlaufphase des Verbrennungsmotors schneller aufzuwärmen, da bereits in der Warmlaufphase Öl gegen die Kolben gespritzt wird, und Wärme aufnimmt. Mit steigender Temperatur des Öls wird der bewegliche Teil bzw. der Kolben aus dem Dehnstoffelement in Richtung zur Auslaßseite gedrückt und verschiebt die Absperrung über das Verbindungselement in dieselbe Richtung. Hierdurch wird die Feder stärker zusammengedrückt, wodurch die Vorspannung der Feder steigt. Damit wird die Kugel mit einer stärkeren Vorspannung gegen die Öffnung bzw. deren Sitz gedrückt. Zum Öffnen des Regelventils ist nun ein höherer Öldruck entsprechend der gestiegenen Federvorspannung erforderlich.

Mit der Erfindung wird also ein Regelventil zur Verfügung gestellt, in dem ein Wachselement, welches auf Temperatur reagiert mit einem federbelasteten Rückschlag, welcher auf Mediumdruck bzw. Öldruck reagiert kombiniert wird. Dabei wird bei niedrigen Temperaturen die Vorspannung der Feder herabgesetzt, wodurch es zu einem sehr frühen Öffnen des Regelventils kommt, oder dieses quasi ständig offen ist. Bei hohen Öltemperaturen erhöht das Wachselement die Vorspannung der Feder, wodurch das Regelventil nur noch bei sehr hohen Systemdrücken bzw. hohen Drehzahlen des Verbrennungsmotors öffnet. Möglich ist selbstverständlich auch anstatt eines mit beiden Parametern (Temperatur/Druck) kombinierten Regelventils einzusetzen, jeweils voneinander separate Regelventile zu verwenden, von denen eines das Wachselement aufweist und das andere federkraftbelastet ist.

Vorteilhaft wird mit dem erfindungsgemäßen Regelventil durch das sehr frühe Öffnen auch schon während der Warmlaufphase des Verbrennungsmotors eine schnellere Erwärmung des Motoröls erreicht, da dieses auch schon in diesem Stadium gegen den Kolben gespritzt wird, und dessen Wärme aufnimmt. Hierdurch verringern sich günstiger Weise Reibungsverluste während der Warmlaufphase, was gleichzeitig zu vermindertem Verschleiß führt. Zudem werden Schadstoffemissionen und auch der Kraftstoffverbrauch während der Warmlaufphase reduziert. Mit dem erfindungsgemäßen Regelventil wird ein vollständig mechanisches Bauteil zur Verfügung gestellt, welches ohne Einsatz jeglicher Elektronik bzw. Elektrotechnik wirkt.

Das Regelventil ist insbesondere zur Verwendung an Spritzvorrichtungen, z. B. an Kolbenspritzvorrichtungen bzw. Kolbenspritzdüsen einsetzbar.

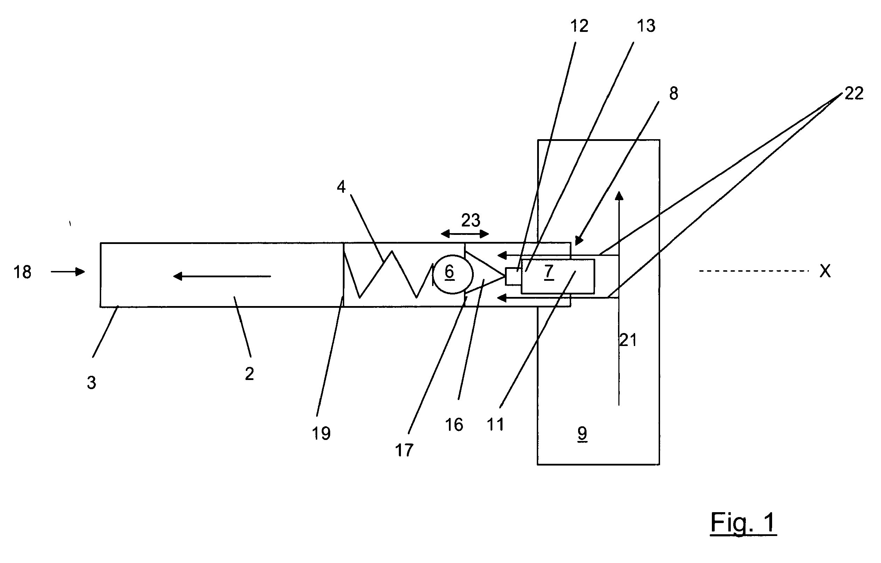

Weitere vorteilhafte Ausgestaltungen der Erfindung sind in den Unteransprüchen und der folgenden Figurenbeschreibung offenbart. Es zeigt die einzige
- Fig. 1: einen Querschnitt durch ein Regelventil.

Figur 1 zeigt ein Regelventil 2. Das Regelventil 2 weist in seinem Gehäuse 3 eine Feder 4 und ein Absperrelement 6 auf. In dem Gehäuse 3 ist ein sich in seiner Ausdehnung temperaturabhängig kontinuierlich veränderndes Dehnstoffelement 7 gegenüberliegend zur Feder 4 angeordnet. Das Gehäuse 3 ist in einer nicht dargestellten Bohrung aufgenommen.

Das Regelventil 2 ist in dem dargestellten Ausführungsbeispiel Bestandteil einer Kolbenspritzvorrichtung für Verbrennungsmotoren um Öl bzw. Motoröl gegen Kolben zu spritzen. Eine Spritzdüse oder dergleichen ist nicht dargestellt.

Das Regelventil 2 ist mit seiner Eingangsseite 8 innerhalb einer Mediumleitung 9 bzw. einer Ölleitung 9 angeordnet und bildet einen Abzweig, so dass Öl aus der Ölleitung durch das Regelventil 2 und über die Spritzdüse zum Kolben geführt bzw. gespritzt werden kann.

Das Dehnstoffelement 7 ist eingangsseitig in dem Gehäuse 3 angeordnet und ständig von dem Öl umflossen. Weiter weist das Dehnstoffelement 7 einen fixierten Teil 11 und einen beweglichen Teil 12 auf, und ist als Wachselement ausgeführt. Der bewegliche Teil 12 ist bevorzugt als Kolben ausgeführt und an einer Wirkseite 13 des Dehnstoffelementes 7 angeordnet. Die Wirkseite 13 ist gegenüberliegend zur Eingangsseite 8 angeordnet.

An der Wirkseite 13 ist der bewegliche Teil 12 mit einem Verbindungselement 16 verbunden, welches anderseitig mit einer Absperrung 17 verbunden ist.

In der Absperrung 17 ist eine Öffnung bzw. ein Sitz angeordnet, welche bzw. welcher an die Ausgestaltung des Absperrelements 6 angepaßt ist. Das Absperrelement 6 ist in dem dargestellten Ausführungsbeispiel als Kugel 6 ausgeführt, und bezogen auf die Absperrung 17 gegenüberliegend zur Einlaßseite 8 angeordnet. Dem Absperrelement 6 ist bezogen auf die Absperrung 17 gegenüberliegend zur Einlaßseite 8, also an der Auslaßseite 18 des Regelventils 2 die Feder 4 zugeordnet. Die Feder 4 stützt sich auslaßseitig einendig an einem Anschlag 19 ab, erstreckt sich von dem Anschlag 19 in Richtung zum Absperrelement 6 und liegt an diesem anderendig an.

Die Absperrung 17 ist axial, also entlang einer Längsmittelachse X beweglich in dem Gehäuse 3 gelagert, und zu diesem so abgedichtet, dass Leckagen vermieden sind.

Eine Hauptströmrichtung des Öls innerhalb der Mediumleitung 9 ist mittels des Pfeils 21 dargestellt. Wie der Figur 1 zu entnehmen ist, ist das Dehnstoffelement 7 ständig von Öl bzw. Motoröl umflossen, was mittels der beiden parallelen Pfeile 22 dargestellt ist. Der in dem Motoröl bzw. der in der Mediumleitung 9 herrschende Systemdruck wirkt ständig gegen das Absperrelement 6.

In Figur 1 ist beispielhaft ein Zustand des Regelventils 2 bei kaltem Motoröl, bzw. in einer Warmlaufphase des Verbrennungsmotors dargestellt. In diesem Zustand ist der bewegliche Teil 12 des Dehnstoffelementes 7 aufgrund der darauf einwirkenden, relativ geringen Öltemperatur in das Dehnstoffelement 7 eingezogen. Durch die Verbindung des beweglichen Teils 12 mit der Absperrung 17 (über das Verbindungselement 16) ist die Absperrung 17 axial, also entlang der Mittelachse X in Richtung zur Einlaßseite 8 verschoben bzw. gezogen. Die Feder 4 drückt das Absperrelement 6 gegen die Absperrung 17 bzw. in deren entsprechenden Sitz. Hierdurch weist die Feder 4 eine sehr geringe Vorspannung auf, so dass der herrschende, geringe Öldruck ausreicht um das Absperrelement 6 aus dem Sitz, also in Richtung zur Auslaßseite 18 herauszudrücken. Damit ist das Regelventil 2 auch schon bei geringen Systemdrücken geöffnet. Steigt nun die Öltemperatur, wirkt diese unmittelbar auf das Dehnstoffelement 7, wodurch der bewegliche Teil 12 aus dem Dehnstoffelement 7 herausgedrückt wird. Damit verschiebt sich auch die Absperrung 17 entlang der Mittelachse X in Richtung zur Auslaßseite 18. Durch die Verschiebung der Absperrung 17 und damit des Absperrelementes 6 in Richtung zur Auslaßseite 18 wird die Feder 4 zusammengedrückt, wodurch deren Vorspannung steigt. Die Feder 4 drückt das Absperrelement 6 nun mit einer derartigen Vorspannung gegen die Absperrung 17, bzw. in deren Sitz, dass das Absperrelement 6 nur mittels eines gestiegenen Systemdrucks aus dem Sitz herausdrückbar, also in Richtung zur Auslaßseite 18 bewegbar ist, um das Regelventil 2 zu öffnen.

Die axiale Bewegung entlang der Mittelachse X des beweglichen Teils 12, der Absperrung 17, des damit verbundenen Verbindungselementes 16, sowie des Absperrelementes 6 ist mittels des Doppelpfeils 23 dargestellt.

## Patentansprüche

1. Regelventil mit einem Gehäuse, wobei das Regelventil in dem Gehäuse (3) eine Feder (4) und ein Absperrelement (6) aufweist, wobei in dem Gehäuse (3) ein, sich in seiner Ausdehnung temperaturabhängig kontinuierlich veränderndes Dehnstoffelement (7) gegenüberliegend zur Feder (4) angeordnet ist **gekennzeichnet durch**
eine Absperrung (17), welche entlang einer Längsmittelachse (X) in dem Gehäuse (3) beweglich gelagert und zu diesem abgedichtet ist, wobei in der Absperrung (17) eine Öffnung angeordnet ist, welche an die Ausgestaltung des Absperrelementes (6) angepasst ist, wobei das Absperrelement (6) bezogen auf die Absperrung (17) gegenüberliegend zu einer Einlassseite (8) angeordnet ist, wobei dem Absperrelement (6) gegenüberliegend zur Einlassseite des Regelventils (2) die Feder (4) zugeordnet ist, welche sich auslassseitig einendig an einem Anschlag (19) abstützt und anderendig an dem Absperrelement (6) so anliegt, dass das Absperrelement (6) in die Öffnung der Absperrung (17) gedrückt wird, und wobei an einer Wirkseite (13) des Dehnstoffelementes ein beweglicher Teil (12) des Dehnstoffelementes (7) mit einem Verbindungselement (16) verbunden ist, welches anderseitig mit der Absperrung (17) verbunden ist.

2. Regelventil nach Anspruch 1,
**dadurch gekennzeichnet, dass**
das Dehnstoffelement (7) einen fixierten Teil (11) und den beweglichen Teil (12) aufweist, das in dem fixierten Teil (11) aufgenommen ist.

3. Regelventil nach Anspruch 1 oder 2,
**dadurch gekennzeichnet, dass**
das Dehnstoffelement (7) als Wachselement ausgeführt ist.

4. Regelventil nach einem der vorhergehenden Ansprüche,
**dadurch gekennzeichnet, dass**
das Dehnstoffelement (7) an der Eingangsseite (8) des Regelventils (2) angeordnet ist, und mit seiner Wirkseite (13) von der Eingangsseite (8) wegorientiert ist.

5. Verwendung eines Regelventils (2) nach einem der vorhergehenden Ansprüche an Spritzvorrichtungen bzw. Kolbenspritzvorrichtungen.

## Claims

1. Control valve with a housing, the control valve comprising a spring (4) and a shutoff element (6) in the housing (3), an expansion element (7), continuously varying in extent as a function of the temperature, being arranged in the housing (3) opposite the spring (4),
**characterized by** a shutoff means (17) which is mounted in the housing (3) such that it can be moved along a longitudinal centre axis (X) and is sealed with respect to the said housing (3), an opening which is adapted to the embodiment of the shutoff element (6) being arranged in the shutoff means (17), the shutoff element (6) being arranged so as to lie opposite an inlet side (8) in relation to the shutoff means (17), the shutoff element (6), lying opposite the inlet side of the control valve(2), being assigned the spring (4) which is supported at one end on the outlet side on a stop (19) and bears at the other end against the shutoff element (6) in such a way that the shutoff element (6) is pressed into the opening of the shutoff means (17), and, on an active side (13) of the expansion element (7), a movable part (12) of the expansion element (7) being connected to a connecting element (16) which is connected on the other side to the shutoff means (17).

2. Control valve according to Claim 1, **characterised in that**
the expansion element (7) comprises a fixed part (11) and a moveable part (12), which is accommodated in the fixed part (11).

3. Control valve according to Claim 1 or 2, **characterised in that**
the expansion element (7) is embodied as a wax element.

4. Control valve according to one of the preceding claims, **characterised in that**,
the expansion element (7) is arranged on an inlet side (8) of the control valve (2), and is oriented with its operative side (13) facing away from the inlet side (8).

5. Use of a control valve (2) according to one of the preceding claims on spray devices or piston spray devices.

## Revendications

1. Soupape de régulation comprenant un boîtier, la soupape de régulation présentant dans le boîtier (3) un ressort (4) et un élément de blocage (6), un élément en matière extensible (7) dont l'extension varie en continu en fonction de la température étant disposé à l'opposé du ressort (4) dans le boîtier (3),
**caractérisée par**
un verrouillage (17), qui est monté de manière mobile le long d'un axe médian longitudinal (X) dans le boîtier (3), et qui est étanché par rapport à celui-ci, une ouverture étant disposée dans le verrouillage (17), laquelle est adaptée à la configuration de l'élément de blocage (6), l'élément de blocage (6) étant disposé, par rapport au verrouillage (17), à l'opposé d'un côté d'entrée (8), à l'élément de blocage (6) étant associé, à l'opposé par rapport au côté d'entrée de la soupape de régulation (2), le ressort (4) qui s'appuie du côté de la sortie à une extrémité contre une butée (19) et qui s'applique à l'autre extrémité contre l'élément de blocage (6) de telle sorte que l'élément de blocage (6) soit pressé dans l'ouverture du verrouillage (17), et une partie mobile (12) de l'élément en matière extensible (7) étant connectée, au niveau d'un côté actif (13) de l'élément en matière extensible, à un élément de connexion (16) qui est connecté de l'autre côté au verrouillage (17).

2. Soupape de régulation selon la revendication 1, **caractérisée en ce que**
l'élément en matière extensible (7) présente une partie fixe (11) et la partie mobile (12) qui est reçue dans la partie fixe (11).

3. Soupape de régulation selon la revendication 1 ou 2,
**caractérisée en ce que**
l'élément en matière extensible (7) est réalisé sous forme d'élément en cire.

4. Soupape de régulation selon l'une quelconque des revendications précédentes,
**caractérisée en ce que**
l'élément en matière extensible (7) est disposé sur le côté d'entrée (8) de la soupape de régulation (2), et est orienté à l'écart du côté d'entrée (8) avec son côté actif (13).

5. Utilisation d'une soupape de régulation (2) selon l'une quelconque des revendications précédentes, sur des dispositifs d'injection ou d'injection à piston.
